# EUROPÄISCHE PATENTANMELDUNG

(11) **EP 2 280 233 A2**
(43) Veröffentlichungstag der Anmeldung: **02.02.2011**
(21) Anmeldenummer: 10007594.4
(22) Anmeldetag: 21.07.2010
(51) Int. Cl.: F24J 2/40, F24J 2/50, G01M 5/00

(54) **Datenaufnahmevorrichtung für Solaranlagen**

(30) Priorität: 21.07.2009 DE 202009009904 U
(71) Anmelder: Semcon München GmbH, 80939 München (DE)
(72) Erfinder: Haas, Franz, 80939 München (DE)

(57) **Zusammenfassung**

Die Erfindung betrifft eine Solaranlage, umfassend zur besseren Überwachung von deren mechanischer Belastung mindestens ein Solarmodul und mindestens eine Haltevorrichtung, wobei das Solarmodul auf der Haltevorrichtung angeordnet ist, und wobei die Solaranlage eine Vorrichtung zur Aufnahme von Daten aufweist, welche durch eine mechanische Belastung auf die Solaranlage hervorgerufen werden.

## Beschreibung

Die Erfindung betrifft eine Datenaufnahmevorrichtung für Solaranlagen. Solaranlagen sind aufgrund ihrer freien Aufstellung diversen äußeren Einflüssen ausgesetzt. Hierunter fallen Wind, Regen, Schnee und Hagel.

Bisher bietet der Stand der Technik keine Lösung an, wie mit diesen Einflüssen Anlagen schonend umgegangen werden kann.

In der DE 20 2006 016 138 wird ein windlastabhängig einstellbarer Solarmodulträger gelehrt. Die gewollte Anstellung des Modulträgerrahmens kann hierbei in Abhängigkeit von der Sonneneinstrahlung und fehlender Windlast oder einer Grundwindlast vorgenommen werden.

Aus der DE 10 2007 018 251 ist ein Prüfsystem, umfassend einen Prüfkreislauf samt Messgeräten, eine Messdatenerfassungseinrichtung und einen Rechner bekannt, in welchem die ermittelten Messergebnisse der Messgeräte zusammenführbar und auswertbar sind. Hierbei sind auch Anschlussleitungen zu weiteren Messgeräten, wie insbesondere Umgebungstemperaturfühler, Pyrgeometer, Pyranometer, Anemometer, vorgesehen, deren Daten für die Auswertung der Messwerte des Prüfkreislaufs erforderlich sind.

Aus der DE 100 20 322 ist im Fachgebiet der Energieerzeugung die Verwendung von DMS-Streifen zur Verschleißmessung bekannt. Es läßt sich dann ablesen, ob hohe mechanische Spannungen in dem Fußbereich des Eintrittsfensters herrschen. Diese Spannungsmessungsvorrichtung zeigt dann an, daß eine Wartung durchgeführt werden muß.

Aus benachbarten Branchen, wie z. B. der Gewinnung von Energie aus Wind ist bekannt, Windkraftanlagen bei zu starkem Wind abzuschalten.

Aufgabe ist es daher, eine Datenaufnahmevorrichtung für Solaranlagen bereitzustellen, welche die Belastung durch äußere Umwelteinflüsse erkennt und trotz Belastung einen Weiterbetrieb sicherstellt.

Gelöst wird diese Aufgabe durch die unabhängigen Ansprüche. Ausgestaltungsformen gehen aus den Unteransprüchen hervor.

Insbesondere wird die Aufgabe gelöst durch eine Solaranlage, umfassend mindestens ein Solarmodul und mindestens eine Haltevorrichtung, wobei das Solarmodul auf der Haltevorrichtung angeordnet ist und wobei die Solaranlage eine Vorrichtung zur Aufnahme von Daten aufweist, welche durch eine mechanische Belastung auf die Solaranlage hervorgerufen werden.

Unter einer Solaranlage wird im Folgenden eine Anlage verstanden, welche solarthermische und/oder solarelektrische Komponenten (i.e. Solarmodule) umfasst.

Unter dem Haltegestell wird im Folgenden eine Vorrichtung verstanden, welche diese Module mit dem Untergrund verbindet, wobei der Untergrund beispielsweise der Boden oder ein Dach sein kann. Hierunter fallen daher sowohl die Aufnahmevorrichtung der Solarmodule als auch das Grundgestell bzw. weitere Fixierungselemente, welche diesem Zweck dienen. Die Vorrichtung zur Aufnahme von Daten, welche eine mechanische Belastung der Solaranlage ausüben, misst vorzugsweise die Spannungen, welche in diesem Haltegestell vorhanden sind. Derartige Spannungen in der Haltevorrichtung können beispielsweise durch Temperatur, Druck bzw. Drehmomente (die beiden letzteren z. B. durch Wind, Regen, Schnee etc. verursacht) und elektrische Ströme (U / I / Widerstand in [Ohm]) hervorgerufen werden. Hierunter fallen keine Wetterdaten, wie z.B. Windgeschwindigkeiten, Regenmengen, Sonneneinstrahlungen, da diese Daten keine "Spannungen" sind. Reine Spannungen aufzunehmen statt Wetterdaten bringt den Vorteil mit sich, daß mit den Spannungen Daten aufgenommen werden, welche Ursachenunabhängig sind.

Besonders bevorzugt werden mechanische Spannungen aufgenommen. Indem die mechanische Spannung an mindestens einer Stelle in z.B. der Haltevorrichtung aufgenommen wird, kann deren Belastung durch eine Vielzahl von Einflussfaktoren erkannt werden und es kann, nachdem diese erkannt wurde, eine entsprechende Gegenmaßnahme eingeleitet werden. Insbesondere nimmt die Vorrichtung zur Aufnahme von Daten mechanische Spannungen in der Haltevorrichtung auf.

Durch die Aufnahme von Daten mechanischer Spannungen in der Haltevorrichtung wird insbesondere bewirkt, dass eine Vielzahl von Einflüssen durch die Aufnahme nur eines einzigen Werts gebündelt werden kann. Bei Wetterdaten hat man hingegen lediglich entweder die Windgeschwindigkeit, oder die Regenmenge bzw. die durch sie bewirkte Last. Nimmt man die mechanischen Spannungen auf, so erhält man unabhängig von den Ursachen immer die Daten der Gesamtlast.

So braucht statt eines separaten Temperatursensors, eines Winddruckmessers, eines Drehmomentmessers bzw. eines Strommessers außerdem nur eine einzige Messapplikation angebracht werden. Weiterhin wird hierdurch berücksichtigt, dass z. B. aufgrund von Materialeigenschaften sich die durch Drehmomente und Biegung bewirkten Spannungen gerade nicht linear addieren, sondern abhängig von der Aufnahmestelle, den dort herrschenden baulichen Gegebenheiten und den dort verwendeten Materialien auf eine oft schwer nachvollziehbare und gerade nicht lineare Weise addieren.

Im Falle einer Haltevorrichtung aus einem T-Träger, welcher mit einem weiteren Trägerelement aus einem anderen Material als demjenigen, aus dem der T-Träger besteht, verschraubt ist, und welcher für diese Verschraubung Öffnungen aufweist, treten beispielsweise um diese Öffnung herum Spannungsspitzen auf, welche sich mit zunehmender Witterungsbelastung und zugehöriger Veränderung des Trägermaterials selbst verändern. Derartige Belastungen sind durch wetterabhängige Sensoren überhaupt nicht ermittelbar.

Die vorliegende Aufgabe wird daher insbesondere gelöst durch eine Vorrichtung zur Aufnahme von mechanischen Spannungen und/oder mechanischen Spannungsänderungen, die auf der Oberfläche selbst oder in der Haltevorrichtung der Solaranlage herrschen.

Zur Bewältigung derartiger komplexer Belastungsprobleme von Solaranlagen bietet der Markt bisher keine Lösungen an.

Die Lösung der gestellten Aufgabe umfasst außerdem eine Vorrichtung zur Aufnahme von Daten von mechanischen Belastungen, welchen nicht die gesamte Solaranlage ausgesetzt sein muß, sondern isoliert auch nur die Haltevorrichtung der Solaranlage ausgesetzt sein kann.

Im Fall, dass exklusiv die mechanische Spannung der Haltevorrichtung anstatt der mechanischen Spannung der gesamten Solaranlage aufgenommen wird, kann eine bessere Vergleichbarkeit der Daten sicher gestellt werden, da die Solarmodule je nach Bauart und Ausrichtung auch unterschiedlichen Belastungen ausgesetzt sind. Außerdem können örtlich besonders interessante Stellen, wie z.B. Kerben, Sollbruchstellen etc. unabhängig überwacht werden.

Eine Ausgestaltungsform der Solaranlage umfasst eine Vorrichtung zur Aufnahme von Daten, wobei die Daten durch DMS Streifen aufgenommen werden. Dies hat den Vorteil, dass die Messvorrichtungen einfach an der betreffenden Stelle appliziert werden können.

Eine weitere Ausgestaltungsform umfasst eine mit der Vorrichtung zur Aufnahme von Daten verbundene Solaranlage nach einem der zuvor genannten Ansprüche, umfassend mindestens eine Aufzeichnungsvorrichtung (z.B. Speicher, Drucker, Datenbank, etc.) und/oder Ausgabevorrichtung (z.B. Bildschirm, RSS-feeds etc.) für die Daten, sowie Verbindungsmittel zur Übermittlung der Daten von der Aufnahmevorrichtung der Daten zur Aufzeichnungsvorrichtung und/oder Ausgabevorrichtung.

Eine weitere Ausgestaltungsform umfasst eine der geschilderten Solaranlagen, umfassend außerdem Motoren, welche geeignet sind, die Solaranlage relativ zur Haltevorrichtung zu bewegen. Hierfür stehen die Motoren mit der Vorrichtung zur Aufnahme von Daten, welche durch eine mechanische Belastung auf die Solaranlage hervorgerufen werden, in Verbindung und die Daten werden optional über eine Steuereinheit und/oder Verarbeitungseinheit zu mindestens einem dieser Motoren übermittelt und steuern diesen (optional über ein Programm (z.B. ein fest im Motor enthaltenes EPROM, oder eine situativ im Motto raufspielbare Software) an). Hierdurch kann bewirkt werden, daß auf Basis der von der Vorrichtung zur Aufnahme von Daten aufgenommenen Daten die Solaranlage relativ zur Haltevorrichtung bewegt und in eine optimierte Position gefahren werden kann. Diese optimierte Position kann je nach Kundenwunsch unterschiedlich sein, also z.B. eine optimierte Energieausbeute, indem das Solarmodul z.B. so hart in die bzw. an der Belastung gefahren wird, daß gerade vordefinierte maximal erlaubte Spannungsspitzen in der Haltevorrichtung nicht erreicht werden, oder z.B. so schonend in die bzw. an der Belastung gefahren wird, daß z.B. jegliche überflüssige Belastung der Haltevorrichtung vermieden wird.

Weiterhin wird die Aufgabe gelöst durch ein Überwachungssystem für Solaranlagen, umfassend mindestens eine der beschriebenen Solaranlagen, Fernkommunikationsmittel zur Übermittlung der Daten, Empfangsvorrichtung und/oder Speicher zur Aufnahme der übermittelten Daten sowie Rechnerkapazitäten zur Verarbeitung der übermittelten und/oder aufgenommenen bzw. gespeicherten Daten.

Die hierbei aufgenommenen Daten können digitaler und/oder analoger Natur sein. Über auf dem Markt verfügbare Messtechnik-Module werden in Verbindung mit der Messtechnik-Software gezielt Belastungszustände an Strukturen erfasst und beispielsweise an einen zentralen Server oder Laptop übertragen und ausgewertet.

Besonders bevorzugt weist die Solaranlage neben den Halterungen und den Solarmodulen und den Vorrichtungen zur Aufnahme von Daten, insbesondere der Aufnahme mechanischer Spannungen, eine Messdatenerfassungseinrichtung wie z.B. einen Mikroprozessor bzw. Einen Computer umfassend einen Mikroprozessor auf, in welchem die ermittelten Messergebnisse der zusammenführbar und auswertbar sind. Dies geschieht vorzugsweise durch Übermittlung der Daten von der Vorrichtung zur Aufnahme der Daten zur Rechnerkapazität. Diese Messdatenerfassungseinrichtung und der Rechner sind vorzugsweise ebenfalls im Container angeordnet.

Was mit diesen Daten geschieht kann vom individuellen Kundenwunsch abhängig individuell gestaltet werden. So kann auf dem Rechner ein Verfahren aufgesetzt werden, welches an der Aufnahmevorrichtung gewonnene und zum Rechner übermittelte Daten lediglich in einem dort vorhandenen Speicher speichert (z.B. um einer Versicherung nachzuweisen, daß die Versicherungsbedingungen eingehalten wurden) und/oder die Daten an eine z.B. an einem dritten Ort verortete Zentrale weiterleitet (z.B. eine Kraftwerkszentrale), und/oder auf Basis der Daten werden Maßnahmen, wie z.B. Bewegungsmaßnahmen eingeleitet (z.B. werden die Module in eine andere, z.B. geschützte Position gefahren, indem diese z.B. über durch den Rechner steuerbare Motoren auf der Haltevorrichtung angeordnet sind) und/oder auf Basis der Daten werden Sicherheitsmaßnahmen eingeleitet (z.B. im Überwachungssystem eingebundene Kameras geschalten).

Eine Ausgestaltungsform des Überwachungssystems für Solaranlagen, wobei der Speicher zusätzlich die Daten maximaler Belastungen umfasst und wobei die Rechnerkapazitäten zur Verarbeitung der übermittelten und/oder gespeicherten Daten einen Algorithmus umfassen, welcher geeignet ist, einen Vergleich der Daten, welche die Haltevorrichtung mechanisch belasten mit den Daten, welche die maximale Belastung repräsentieren, vorzunehmen, ermöglicht den Aufbau eines Überwachungssystems, mit dessen Hilfe kritische Zustände erkannt werden können. So können z. B. aufgrund von Erfahrungswerten dann auch Grenzwerte für die zulässigen Belastungen festgelegt werden.

Auf dieser Basis können gezielt Maßnahmen/Aktionen ausgelöst und/oder statistische Auswertungen erstellt werden.

Eine Ausgestaltungsform des Überwachungssystems für Solaranlagen, wobei das Ergebnis des Vergleichs der Daten, welche die Haltevorrichtung mechanisch belasten mit den Daten, welche die maximale Belastung repräsentieren, mit Hilfe von weiteren Fernkommunikationsmitteln an eine an einem dritten Ort verortbare Überwachungseinheit übertragen, ermöglicht den Aufbau einer Fernüberwachung für eine solche Anlage. Diese Fernübertragung kann kabelgebunden und/oder kabellos durchgeführt werden.

Durch einen derartigen Einsatz der Messtechnik ist es möglich, Messdaten zu gewinnen, ohne direkt vor Ort sein zu müssen. Dies bietet insbesondere Möglichkeiten für entfernte, schwer zugängliche und/oder ständig bewegte Messeinrichtungen.

Die Aufgabe wird auch gelöst durch ein Gebäude umfassend mindestens eine erfindungsgemäße Solaranlage und/oder umfassend mindestens ein erfindungsgemäßes Überwachungssystem für Solaranlagen.

Dieses erfindungsgemäße Konzept ist somit nicht nur für Solar- und Photovoltaikanlagen, deren Grundrahmen, Rohre und Leitungen, sondern auch für Dachkonstruktionen oder andere Konstruktionen anwendbar.

Insbesondere ist es auch zur Überwachung der Statik und Belastungen von Strukturen eingesetzt werden, wie z. B. der Abschätzung der Einsturzgefahr von Flachdächern bei zu hoher Schneelast.

Aber nicht nur Teile von Gebäuden, sondern ganze Gebäude können auf diese Weise überwacht werden.

All diese Lösungen weisen diverse Vorteile auf. So ist es z. B. hierdurch möglich:
- drehbar gelagerte Solar- und Photovoltaikanlagen aus dem Wind zu drehen (Verringern der Windkraft);
- einen Alarm auszulösen, wenn auf den Solar- und Photovoltaikanlagen zu viel Schnee liegt (zu hohe Schneelast bei Flachdächern => Einsturzgefahr);
- einen Alarm auszulösen, wenn Solar- und Photovoltaikmodule gestohlen werden;
- einen Alarm auszulösen, wenn eine Konstruktion einzustürzen droht (z. B. Materialermüdung);
- den Belastungszustand von Dachkonstruktionen zu überwachen; die o.g. Anwendung auf andere Bereiche (z.B. Rohrleitungsüberwachung, Windkraftanlagen, Brücken, Anhänger-kupplungen) zu übertragen;
- eine Diebstahlsicherung bereit zu stellen;
- das System jederzeit nachrüstbar auszulegen.

Eine Ausgestaltungsform wird durch die Figur gezeigt. Hierbei zeigt

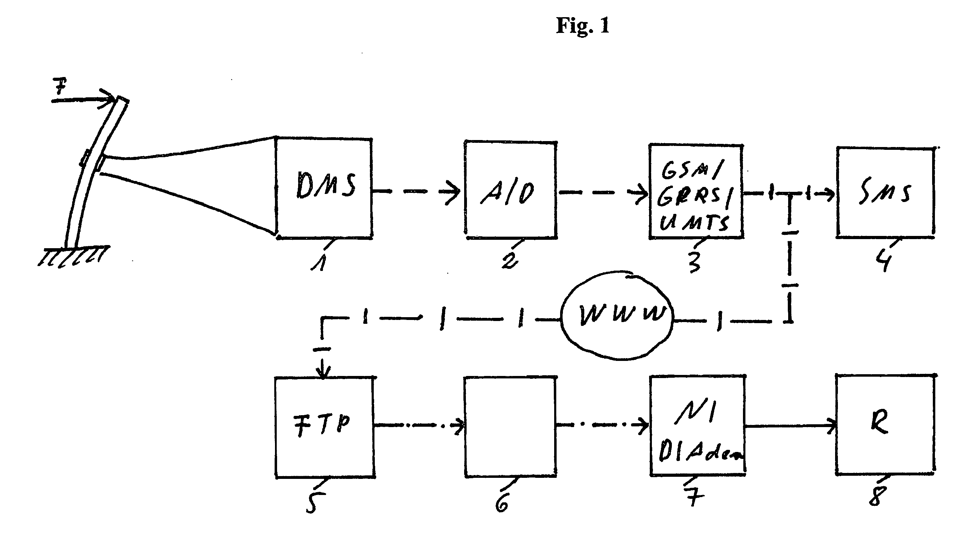

Fig. 1 einen Aufbau eines erfindungsgemäßen Überwachungssystems.

Diverse DMS-Messmodule 1 erfassen die relevanten Werte. Die Daten werden analog/digital an die Speichereinheit (Datenlogger) 3 übertragen. Bei Bedarf kann bei Überschreitung eines Schwellwertes eine Warnung 4 (z. B. per SMS) erfolgen. Ein integriertes GSM/GPRS/UMTS Modem überträgt die Daten auf einen FTP Server 5. Von dort werden die Daten auf einen Server 6 überspielt und aufbereitet. Mit diverser Auswerte-Software 7 werden die Daten ausgewertet und analysiert. Alternativ können die Signale auch direkt vom Messmodul 2 an einen Laptop übertragen werden.

Hierbei werden in der Solaranlage die Daten durch DMS Streifen (z.B. Fa. HBM 1-LY11-6/120A) aufgenommen und mit Hilfe eines Kabels oder Fernkommunikationsmittel weitergeleitet an z.B. einen Rechner (z.B. Computer), und/oder eine Überwachungseinrichtung (z.B. Büro mit Bildschirm), und/oder einen Motor, über welchen das Solarmodul relativ zur Haltevorrichtung beweglich ist. Die vom DMS-Streifen abgegebenen Daten können optional (z.B. durch eine Verstärkerschaltung) verstärkt werden und auf diese Weise so weit aufbereitet werden, daß sie geeignet sind, als Steuersignal einen solchen Motor unmittelbar anzusteuern.

Das Überwachungssystem für Solaranlagen, kann z.B. umfassen: mindestens eine der geschilderten Solaranlagen, sowie Fernkommunikationsmittel (z.B. Fa. CSM GSM/GPRS/UMTS-Modem) zur Übermittlung der Daten, sowie Speicher (z.B. Fa. Sandisk CF-Speicherkarte) zur Aufnahme der übermittelten Daten, sowie Rechnerkapazitäten (z.B. Fa. Dell Unix-Server) zur Verarbeitung der übermittelten und/oder gespeicherten Daten. Kundenspezifische Programme können dann im Überwachungssystem abhängig von den von den DMS gelieferten Daten die gewünschten Reaktionen bewirken.

Im Falle einer Fernkommunikation können Fernkommunikationsmittel (z.B. Fa. CSM CAN-Bus Datenübertragung) die Daten der DMS an eine Überwachungseinheit (z.B. Fa. CSM UniCAN2 Logger) überragen. Kundenspezifische Programme können dann abhängig von den von den DMS gelieferten Daten inan der Überwachungseinheit die gewünschten Reaktionen bewirken.

Insbesondere zeigt Fig. 1:
- Befestigte DMS-Streifen 1;
- Ein Analog/Digital-Messmodul 2;
- Einen Datenlogger mit GSM/GRPS/UMTS Modem-Einheit 3
- SMS-Warnung bei unzulässiger Grenzwertüberschreitung 4
- FTP-Server 5
- Einen Semcon-Server, automatische Datenaufbereitung 6
- Datenauswertung NI DIAdem 7
- Messreport 8

## Patentansprüche

1. Solaranlage, umfassend mindestens ein Solarmodul und mindestens eine Haltevorrichtung, wobei das Solarmodul auf der Haltevorrichtung angeordnet ist, und wobei die Solaranlage eine Vorrichtung zur Aufnahme von Daten aufweist, welche durch eine mechanische Belastung auf die Solaranlage hervorgerufen werden.

2. Solaranlage nach Anspruch 1, wobei die Solaranlage solarelektrische und/oder solarthermische Komponenten umfasst.

3. Solaranlage nach einem der zuvor genannten Ansprüche, wobei die Vorrichtung zur Aufnahme von Daten aufnimmt, welche Belastungsarten die Haltevorrichtung mechanisch belasten.

4. Solaranlage nach einem der zuvor genannten Ansprüche, wobei die Vorrichtung zur Aufnahme der Daten Daten von Spannungen und/oder Drehmomente aufnimmt, welchen die Haltevorrichtung ausgesetzt ist.

5. Solaranlage nach Anspruch 4, wobei die Daten durch DMS Streifen aufgenommen werden.

6. Solaranlage nach einem der zuvor genannten Ansprüche, umfassend mindestens eine Aufzeichnungs- und/oder Ausgabevorrichtung für die Daten.

7. Solaranlage nach einem der zuvor genannten Ansprüche, umfassend Motoren, welche geeignet sind, die Solaranlage relativ zur Haltevorrichtung zu bewegen.

8. Überwachungssystem für Solaranlagen, umfassend mindestens eine Solaranlage nach einem der zuvor genannten Ansprüche, sowie Fernkommunikationsmittel zur Übermittlung der Daten, sowie Speicher zur Aufnahme der übermittelten Daten, sowie Rechnerkapazitäten zur Verarbeitung der übermittelten und/oder gespeicherten Daten.

9. Überwachungssystem für Solaranlagen nach Anspruch 8, wobei der Speicher zusätzlich die Daten maximaler Belastungen umfasst und wobei die Rechnerkapazitäten zur Verarbeitung der übermittelten und/oder gespeicherten Daten einen Algorithmus umfassen, welcher geeignet ist, einen Vergleich der Daten, welche die Haltevorrichtung mechanisch belasten mit den Daten, welche die maximale Belastung repräsentieren vorzunehmen.

10. Überwachungssystem für Solaranlagen nach Anspruch 9, wobei das Ergebnis des Vergleichs der Daten von mechanischen Belastungen der Haltevorrichtung mit den Daten, welche die maximale Belastung repräsentieren, mit Hilfe von weiteren Fernkommunikationsmitteln an eine Überwachungseinheit übertragen wird.

11. Gebäude umfassend Solaranlagen nach einem der Ansprüche 1-7 und/oder umfassend ein Überwachungssystem für Solaranlagen nach einem der Ansprüche 8 bis 10.
